# EUROPÄISCHE PATENTANMELDUNG

(11) **EP 4 622 077 A1**
(43) Veröffentlichungstag der Anmeldung: **24.09.2025**
(21) Anmeldenummer: 25164274.0
(22) Anmeldetag: 18.03.2025
(51) Int. Cl.: H02K 15/121, H02K 15/122, H02K 15/125

(54) **VERFAHREN ZUM HERSTELLEN EINES BAUTEILS FÜR EINE ELEKTRISCHE MASCHINE SOWIE ENTSPRECHENDE VORRICHTUNG ZUR HERSTELLUNG DES BAUTEILS**

(30) Priorität: 20.03.2024 DE 102024107995
(71) Anmelder: AUDI AG, 85057 Ingolstadt (DE)
(72) Erfinder: Gerngroß, Martin, 82125 Kinding (DE); Bier, Alexander, 85080 Gaimersheim (DE)

(57) **Zusammenfassung**

Die Erfindung betrifft ein Verfahren zum Herstellen eines Bauteils (2) für eine elektrische Maschine, wobei das Bauteil (2) einen Magnetkern (4) mit zumindest einer Nut (7) aufweist, die wenigstens eine Drahtwicklung (8) aufnimmt, parallel zu einer Längsmittelachse des Bauteils (2) verläuft und den Magnetkern (4) vollständig durchgreift, und wobei das Bauteil (2) während eines Einbringens eines Imprägniermittels in die zumindest eine Nut (7) derart ausgerichtet wird, dass das Imprägniermittel durch Schwerkrafteinfluss in Richtung der Längsmittelachse in die zumindest eine Nut (7) hineingedrängt wird. Dabei ist vorgesehen, dass eine Temperatur der wenigstens einen Drahtwicklung (8) durch Anlegen eines elektrischen Stroms während des Einbringens des Imprägniermittels in die zumindest eine Nut (7) zunächst auf eine zur Reduzierung einer Viskosität des Imprägniermittels gewählte niedrigere erste Temperatur und anschließend auf eine zur Erhöhung der Viskosität des Imprägniermittel gewählte höhere zweite Temperatur eingestellt wird. Die Erfindung betrifft weiterhin eine Vorrichtung (1) zur Herstellung eines Bauteils (2) für eine elektrische Maschine.

## Beschreibung

Die Erfindung betrifft ein Verfahren zum Herstellen eines Bauteils für eine elektrische Maschine, wobei das Bauteil einen Magnetkern mit zumindest einer Nut aufweist, die wenigstens eine Drahtwicklung aufnimmt, parallel zu einer Längsmittelachse des Bauteils verläuft und den Magnetkern vollständig durchgreift, und wobei das Bauteil während eines Einbringens eines Imprägniermittels in die zumindest eine Nut derart ausgerichtet wird, dass das Imprägniermittel durch Schwerkrafteinfluss in Richtung der Längsmittelachse in die zumindest eine Nut hineingedrängt wird. Die Erfindung betrifft weiterhin eine Vorrichtung zur Herstellung eines Bauteils für eine elektrische Maschine.

Aus dem Stand der Technik ist beispielsweise die Druckschrift DE 1 538 918 A bekannt. Diese beschreibt ein Verfahren zum Imprägnieren von Wicklungen elektrischer Maschinen, bei dem die Wicklung erwärmt wird, worauf polymerisations- oder polyadditionsreaktionfähige Imprägniermittel, gegebenenfalls mit die Stoffeigenschaften beeinflussenden Zusätzen, in die Wicklung eingebracht, danach zum Gelieren und schließlich zum Aushärten gebracht werden. Dabei ist vorgesehen, dass auf den die Wicklung tragenden, senkrecht stehenden Maschinenteil ein das Imprägniermittel in die Wicklung leitender Trichter aufgesetzt wird, in den die gesamte benötigte Imprägniermittelmenge eingeschüttet wird, wobei die Gelierzeit so eingestellt ist, dass das Gelieren einsetzt, sobald die Wicklung völlig durchdrungen ist.

Weiterhin offenbart die Druckschrift US 2022/0094248 A1 ein Verfahren zur Herstellung eines Stators einer rotierenden elektrischen Maschine, wobei der Stator eine Spule und einen Statorkern aufweist, in dem eine Nut ausgebildet ist, der die Spule aufnimmt, und wobei ein Füllmaterial, dessen Viskosität bei einer ersten Temperatur niedrig ist und dessen Viskosität bei einer zweiten Temperatur, die höher als die erste Temperatur ist, hoch ist, von einer Auftragsseite aus in die Nut gefüllt wird, wobei das Herstellungsverfahren umfasst: einen ersten Schritt des Erzeugens einer Temperaturdifferenz in dem Statorkern, sodass die Einspritzseite die erste Temperatur annimmt und eine gegenüberliegende Seite der Einspritzseite die zweite Temperatur annimmt; und einen zweiten Schritt des Einspritzens des Füllmaterials von der Einspritzseite in einem Zustand, in dem die Temperaturdifferenz aufrechterhalten wird.

Weiter offenbart die Druckschrift WO 2022/128632 A1 ein Verfahren zum Imprägnieren von Spulen eines Rotors mit einem Imprägniermittel, wobei der Rotor eine Rotorwelle, einen auf der Rotorwelle montierten Rotorkern und in Kanälen in dem Rotorkern angeordnete Spulen umfasst, wobei der Rotorkern ein erstes Ende und ein zweites Ende aufweist, das dem ersten Ende gegenüberliegt, und die Kanäle entlang des Rotorkerns von dem ersten Ende zu dem zweiten Ende verlaufen, wobei das Verfahren umfasst: Positionieren des Rotors in einer vertikalen Position, sodass sich das erste Ende oberhalb des zweiten Endes befindet; Aufbringen eines Imprägniermittels auf die Spulen vom ersten Ende aus, während sich der Rotor in der vertikalen Position befindet, sodass das Imprägniermittel aufgrund der Schwerkraft durch die Kanäle entlang der Spulen vom ersten Ende zum zweiten Ende fließt; und Härten des Imprägniermittels, während es auf die Spulen aufgebracht wird, nur am zweiten Ende, um das zweite Ende durch das gehärtete Imprägniermittel zu verschließen, während ein Füllen der Kanäle mit dem Imprägniermittel zugelassen wird.

Es ist Aufgabe der Erfindung, ein Verfahren zum Herstellen eines Bauteils für eine elektrische Maschine vorzuschlagen, welches gegenüber bekannten Verfahren Vorteile aufweist, insbesondere ein rasches und zuverlässiges Füllen der Nut mit dem Imprägniermittel ermöglicht.

Dies wird erfindungsgemäß mit einem Verfahren zum Herstellen eines Bauteils für eine elektrische Maschine mit den Merkmalen des Anspruchs 1 erreicht. Dabei ist vorgesehen, dass eine Temperatur der wenigstens einen Drahtwicklung durch Anlegen eines elektrischen Stroms während des Einbringens des Imprägniermittels in die zumindest eine Nut zunächst auf eine zur Reduzierung einer Viskosität des Imprägniermittels gewählte niedrigere erste Temperatur und anschließend auf eine zur Erhöhung der Viskosität des Imprägniermittels gewählte höhere zweite Temperatur eingestellt wird.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Verfahren dient zum Herstellen des Bauteils für die elektrische Maschine. Das Bauteil ist bevorzugt Bestandteil der elektrischen Maschine, kann jedoch selbstverständlich auch separat von dieser vorliegen, insbesondere bis zu einer Montage des Bauteils an oder in der elektrischen Maschine. Die elektrische Maschine verfügt vorzugsweise über einen Stator sowie über einen Rotor, wobei der Rotor bezüglich des Stators um eine Rotordrehachse drehbar gelagert ist. Die elektrische Maschine ist hierbei grundsätzlich beliebig ausgestaltet, beispielsweise handelt es sich um eine Asynchronmaschine, eine permanenterregte Synchronmaschine oder eine fremderregte Synchronmaschine. Vorzugsweise bildet der Stator oder der Rotor der elektrischen Maschine das Bauteil, sodass das Bauteil also als Stator oder als Rotor der elektrischen Maschine ausgestaltet ist und gemäß dem beschriebenen Verfahren hergestellt wird. Selbstredend kann es auch vorgesehen sein, dass sowohl der Stator als auch der Rotor der elektrischen Maschine jeweils als ein solches Bauteil vorliegen, also beide gemäß dem beschriebenen Verfahren hergestellt werden.

In jedem Fall verfügt das Bauteil über einen Magnetkern, in welchem die zumindest eine Nut, bevorzugt jedoch mehrere Nuten hergestellt sind. Der Magnetkern besteht vorzugsweise aus einem weichmagnetischen Material, insbesondere aus Elektroblech oder dergleichen. Soweit in der Beschreibung auf die zumindest eine Nut oder die Nut eingegangen wird, so sind die Ausführungen stets äquivalent. Erläuterungen, welche die zumindest eine Nut betreffen, gelten also auch für die Nut und umgekehrt. Zudem sind die Ausführungen auch auf jede der mehreren Nuten übertragbar, soweit vorhanden. Die Nut verläuft parallel zu der Längsmittelachse des Bauteils, welche vorzugsweise sowohl im Falle des Stators als auch des Rotors mit der Rotordrehachse zusammenfällt, dieser also entspricht. Die mehreren Nuten sind in Umfangsrichtung beabstandet voneinander angeordnet, insbesondere sind sie in Umfangsrichtung gleichmäßig verteilt angeordnet. Besonders bevorzugt weisen die Nuten jeweils denselben Abstand zu der Längsmittelachse auf.

Die Nut durchgreift den Magnetkern in axialer Richtung bezüglich der Längsmittelachse vollständig, sodass sie in axialer Richtung gegenüberliegende Stirnseiten des Magnetkerns jeweils unter Ausbildung einer Mündungsöffnung durchgreifen. Die Nut wird in Umfangsrichtung gesehen auf gegenüberliegenden Seiten von Polen des Magnetkerns begrenzt. In radialer Richtung nach innen wird die Nut von einem Nutboden begrenzt, welcher ebenfalls von den Magnetkern gebildet ist. Vorzugsweise ist die Nut in radialer Richtung nach außen offen, insbesondere über ihre gesamte Erstreckung in axialer Richtung hinweg. Ein radial innenliegender Bereich des Magnetkerns, von welchem die Pole ausgehen, kann auch als Grundkörper des Magnetkerns bezeichnet werden. Auf ihrer dem Grundkörper abgewandten Seite können die Pole mit Polschuhen ausgestaltet sein, sodass sie sich also auf ihrer in radialer Richtung außen liegenden Seite in Umfangsrichtung aufweiten. Die Polschuhe sind vorzugsweise in Umfangsrichtung voneinander beabstandet angeordnet, bevorzugt in axialer Richtung durchgehend.

In der Nut ist die wenigstens eine Drahtwicklung angeordnet. Beispielsweise umgreift die Drahtwicklung einen der Pole, insbesondere ist jeder der Pole jeweils von einer solchen Drahtwicklung umgriffen. Die wenigstens eine Drahtwicklung, also die genau eine Drahtwicklung oder die mehreren Drahtwicklungen, verfügt vorzugsweise über mehrere Windungen, die jeweils den entsprechenden Pol umgreifen. Sofern im Rahmen dieser Beschreibung von der wenigstens einen Drahtwicklung oder der Drahtwicklung die Rede ist, so sind die Ausführungen stets äquivalent. Erläuterungen zu der wenigstens einen Drahtwicklung sind insoweit auf die Drahtwicklung und Ausführungen zu der Drahtwicklung auf die wenigstens eine Drahtwicklung übertragbar. Liegen mehrere Drahtwicklungen vor, so sind die Erläuterungen für die Drahtwicklung beziehungsweise die wenigstens eine Drahtwicklung bevorzugt auf jede der mehreren Drahtwicklungen übertragbar.

Während des Herstellens des Bauteils soll das Imprägniermittel in die Nut eingebracht werden, um die dort vorliegende Drahtwicklung zu imprägnieren. Dies dient zum einen einer mechanischen Fixierung der Drahtwicklung, zum anderen werden jedoch auch weitere Aufgaben erfüllt, wie die Erhöhung des elektrischen Isolationsvermögens der Drahtwicklung, die Verbesserung einer Wärmeabfuhr von der Drahtwicklung sowie die Verbesserung eines Schutzes vor Umwelteinflüssen, beispielsweise vor Luftfeuchtigkeit, Schmiermittel oder dergleichen. Diese weiteren Aspekte sind insbesondere bei einer Verwendung der elektrischen Maschine als Traktionsmaschine für ein Kraftfahrzeug von Bedeutung.

Grundsätzlich stehen zahlreiche Möglichkeiten zum Einbringen des Imprägniermittels in die Nut zur Verfügung, insbesondere das Träufelverfahren, das Heißtauchverfahren und das Rolltauchverfahren. Weitere Verfahren sind zum Beispiel das Vakuumverfahren (VI-Verfahren), das Vakuumdruckverfahren (VPI-Verfahren) und das atmosphärische Tauchverfahren (dip & bake-Verfahren). Die genannten Verfahren haben jedoch den Nachteil, dass zum einen Imprägniermittel nicht nur in die Nut eingebracht wird, sondern auch auf eine Außenseite des Bauteils gelangt. Dies macht eine aufwändige Reinigung des Bauteils nach dem Imprägnieren notwendig. Zum anderen kann das Imprägniermittel in einen Kühlmittelkanal gelangen, der zusätzlich zu der Nut in dem Magnetkern hergestellt ist, beispielsweise parallel zu der Nut. Entsprechend verschließt und/oder verstopft das Imprägniermittel den Kühlmittelkanal, sodass dieser sehr aufwendig gereinigt werden muss. Teilweise ist ein Reinigen zudem nicht möglich.

Aus diesem Grund ist es vorgesehen, das Einbringen des Imprägniermittels derart durchzuführen, dass es zu wesentlichen Teilen oder sogar ausschließlich zu der Drahtwicklung und/oder in die Nut gelangt, nicht jedoch auf die Außenseite des Bauteils. Hierdurch wird das Imprägniermittel derart in die Nut eingebracht, dass es durch Schwerkrafteinfluss in Richtung der Längsmittelachse in diese hineingedrängt wird. Zu diesem Zweck ist das Bauteil entsprechend derart angeordnet, dass seine Längsmittelachse parallel oder zunächst im Wesentlichen parallel zu einem Schwerkraftvektor ausgerichtet ist. Ein auf das Imprägniermittel wirkender Schwerkrafteinfluss soll insoweit ausschließlich oder zumindest nahezu ausschließlich in axialer Richtung bezüglich der Längsmittelachse auf das Imprägniermittel wirken.

Vorzugsweise wird das Imprägniermittel durch wenigstens eine Düse ausgebracht, welche bezüglich des Schwerkraftvektors oberhalb des Bauteils, insbesondere oberhalb der Nut oder einer der Nuten oder oberhalb eines von der Drahtwicklung ausgebildeten Wickelkopfs angeordnet ist. Vorzugsweise wird die Düse oberhalb des Wickelkopfs angeordnet, von dem ausgehend sich die Drahtwicklung in benachbarte Nuten erstreckt, sodass das Imprägniermittel über den Wickelkopf in beide Nuten strömt. Beispielsweise werden mehrere Düsen zum Ausbringen des Imprägniermittels verwendet, in diesem Fall ist jede der Düsen über einer den Nuten oder über mehreren Wickelköpfen angeordnet, sodass das aus der jeweiligen Düse austretende Imprägniermittel durch den auf das Imprägniermittel wirkenden Schwerkrafteinfluss in die unter der Düse liegende Nut hineingedrängt wird, beispielsweise über den Wickelkopf beziehungsweise einen außerhalb der Nut angeordneten Bereich der Drahtwicklung.

Hierbei kann es vorgesehen sein, dass das Imprägniermittel zunächst auf den von der Drahtwicklung ausgebildeten Wickelkopf trifft, der außerhalb der Nut von der Drahtwicklung gebildet ist. Das Imprägniermittel tritt in den Wickelkopf ein, insbesondere zwischen die den Wickelkopf ausbildenden Windungen der Drahtwicklung, und wird durch den Schwerkrafteinfluss in Richtung der Nut und letztlich in die Nut hineingedrängt. Beispielsweise weist das Bauteil auf in axialer Richtung gegenüberliegenden Seiten jeweils einen solchen Wickelkopf auf. Entsprechend tritt das Imprägniermittel nach seinem Austreten aus der Düse zunächst in einen oberen der Wickelköpfe ein, durchläuft nachfolgend die Nut und tritt aus der Nut in einen unteren der Wickelköpfe ein. Über diesen kann es anschließend von dem Bauteil abgeführt werden. Diese Vorgehensweise vermeidet zuverlässig ein aufwendiges Reinigen des Bauteils, da das Imprägniermittel überwiegend in die Nut und nicht auf die Außenseite des Bauteils oder in den Kühlmittelkanal gelangt.

Als Imprägniermittel wird ein Mittel verwendet, welches bei unterschiedlichen Temperaturen unterschiedliche Viskositäten aufweist. Insbesondere wird als Imprägniermittel ein Mittel verwendet, welches in einem ersten Temperaturbereich eine niedrigere erste Viskosität und in einem zweiten Temperaturbereich eine zweite höhere Viskosität aufweist. Das Imprägniermittel ist insbesondere ein Imprägnierharz, wie zum Beispiel ein Epoxidharz, insbesondere ein 1K-Epoxidharz oder ein 2K-Epoxidharz, oder ein Polyesterharz, insbesondere ein 1K-Polyesterharz oder ein 2K-Polyesterharz, beispielsweise ein Polyesterimidharz. Der erste Temperaturbereich liegt üblicherweise über einer Umgebungstemperatur, sodass es normalerweise zum Einbringen des Imprägniermittels in die Nut notwendig ist, das Imprägniermittel zunächst zu temperieren, nämlich beispielsweise auf eine unter der ersten Temperatur oder unterhalb des ersten Temperaturbereichs liegende Temperatur.

Das Bauteil wird vor dem Einbringen des Imprägniermittels vorgewärmt, insbesondere auf eine Temperatur von mindestens 100 °C gebracht. Das temperierte Imprägniermittel wird dann in die Nut des vorgewärmten Bauteils eingebracht. Üblicherweise ist jedoch die Temperatur des Imprägniermittels geringer als die Temperatur des Bauteils, sodass Wärme von dem Bauteil auf das in die Nut eingebrachte Imprägniermittel übergeht. Da während des Einbringens des Imprägniermittels bei dieser Vorgehensweise keine Wärme in das Bauteil eingebracht wird, sondern sich dieses im Gegenteil aufgrund des Wärmeübertrags auf das Imprägniermittel und/oder aufgrund von Wärmeverlust in Richtung der Umgebung mit der Zeit abkühlt, erhöht sich die Viskosität aufgrund der sich verringernden Temperatur des Imprägniermittels und die Fließfähigkeit des Imprägniermittels wird stetig schlechter.

Liegt das Imprägniermittel in der Nut vor, so wird das Bauteil einer Wärmebehandlung unterzogen, die Temperatur also erhöht, nämlich auf eine in dem zweiten Temperaturbereich liegende Temperatur, sodass die Viskosität ansteigt, insbesondere bis zu einem vollständigen Verfestigen des Imprägniermittels, beispielsweise durch Gelieren. Während dieser Wärmebehandlung wird üblicherweise kein weiteres Imprägniermittel eingebracht, das Einbringen wird also vor der Wärmebehandlung unterbrochen. Es kann vorkommen, dass aufgrund der beschriebenen Erhöhung der Viskosität während des Einbringens des Imprägniermittels in die Nut aufgrund der Reduzierung seiner Temperatur, diese nicht vollständig mit dem Imprägniermittel gefüllt ist. Entsprechend entstehen Hohlräume, welche frei von Imprägniermittel sind, und die nach dem Verfestigen des Imprägniermittels dauerhaft in dem Bauteil verbleiben. Dies kann ein schlechtes Halten der Drahtwicklung, eine schlechte Wärmeableitung und/oder eine Unwucht des Bauteils zur Folge haben.

Aus diesem Grund ist es nun vorgesehen, die Drahtwicklung während des Einbringens des Imprägniermittels in die Nut auf bestimmte Temperaturen einzustellen, nämlich zunächst auf die erste Temperatur und anschließend auf die zweite Temperatur. Das Einstellen der zweiten Temperatur erfolgt also nicht erst nach dem Einbringen des Imprägniermittels beziehungsweise nachdem das Einbringen beendet oder unterbrochen wurde. Vielmehr erfolgt das Einbringen vorzugsweise durchgehend während des Einstellens der Temperatur, insbesondere während des Einstellens der Temperatur ausgehend von der ersten Temperatur in Richtung der zweiten Temperatur oder bis auf die zweite Temperatur. Die erste Temperatur liegt vorzugsweise in dem bereits erwähnten ersten Temperaturbereich und die zweite Temperatur in dem ebenfalls bereits erwähnten zweiten Temperaturbereich. Die erste Temperatur der Drahtwicklung ist also derart gewählt, dass eine geringe Viskosität des Imprägniermittels vorliegt, sodass es eine gute Fließfähigkeit aufweist. Beispielsweise ist die erste Temperatur der Drahtwicklung gleich einer ersten Temperatur des Imprägniermittels, bei welcher es seine niedrigere Viskosität aufweist, und die zweite Temperatur der Drahtwicklung gleich einer zweiten Temperatur des Imprägniermittels, bei welcher es seine höhere Viskosität aufweist.

Das Einstellen der Temperatur der Drahtwicklung erfolgt durch das Anlegen des elektrischen Stroms an die Drahtwicklung, sodass also die Drahtwicklung von dem elektrischen Strom mit einer bestimmten Spannung und einer bestimmten Stromstärke durchflossen wird. Diese Vorgehensweise hat den Vorteil, dass die Drahtwicklung, zwischen deren Windungen das Imprägniermittel eindringen soll, nicht lediglich mittelbar über andere Elemente, beispielsweise über den Magnetkern, erwärmt wird, sondern dass ein unmittelbares Einstellen der Temperatur der Drahtwicklung auf eine bestimmte Temperatur vorgenommen wird. Entsprechend kann die Temperatur der Drahtwicklung unter Verwendung des ersten Jouleschen Gesetzes beziehungsweise des Stromwärmegesetzes ganz gezielt zunächst derart eingestellt werden, dass das Imprägniermittel zuverlässig in die Nut und zwischen die Windungen der Drahtwicklung eindringt. Anschließend wird die Temperatur - ebenfalls unter Verwendung des Stromwärmegesetzes - zum Erhöhen der Viskosität des Imprägniermittels eingestellt, insbesondere zum irreversiblen Erhöhen der Viskosität.

Besonders bevorzugt ist die erste Temperatur derart gewählt, dass sich eine möglichst niedrige Viskosität des Imprägniermittels einstellt. Die erste Temperatur wird hierzu in Abhängigkeit des verwendeten Imprägniermittels gewählt. Die zweite Temperatur wird vorzugsweise derart gewählt, dass das Verfestigen des Imprägniermittels über eine bestimmte Zeitspanne hin erfolgt, sodass das Imprägniermittels mit dem Ende der Zeitspanne im Wesentlichen die höhere Viskosität aufweist. Mit der beschriebenen Vorgehensweise wird ein besonders effektives und effizientes Einbringen des Imprägniermittels in die Nut und hierbei auch zwischen die Windungen der Drahtwicklung erreicht.

Eine Weiterbildung der Erfindung sieht vor, dass ein Magnetkern verwendet wird, in welchem wenigstens ein Kühlmittelkanal eine Stirnseite des Magnetkerns durchgreift und/oder parallel zu der zumindest einen Nut verläuft. Der Kühlmittelkanal dient dem Führen eines Kühlmittels während eines Betriebs der elektrischen Maschine. Vorzugsweise ist er entlang seiner gesamten Erstreckung durchgehend geschlossen. Der Kühlmittelkanal durchgreift vorzugsweise die Stirnseite des Magnetkerns, insbesondere durchgreift er gegenüberliegende Stirnseiten des Magnetkerns. Durch das Durchgreifen der Stirnseite des Magnetkerns durch den Kühlmittelkanal wird eine Mündungsöffnung gebildet, welche vorzugsweise in derselben Ebene liegt wie eine Mündungsöffnung, die durch das Durchgreifen derselben Stirnseite durch die Nut gebildet ist.

Bevorzugt durchgreift der Kühlmittelkanal den Magnetkern in axialer Richtung bezüglich der Längsmittelachse vollständig und durchgehend. Insbesondere ist er parallel zu der Nut angeordnet. Beispielsweise liegt der Kühlmittelkanal in radialer Richtung gesehen weiter innen als die Nut, sodass also ein Abstand des Kühlmittelkanals zu der Längsmittelachse kleiner ist als ein Abstand der Nut zu der Längsmittelachse. Es kann vorgesehen sein, dass in dem Magnetkern lediglich ein einziger Kühlmittelkanal ausgestaltet ist. Vorzugsweise liegen jedoch mehrere Kühlmittelkanäle vor. Erläuterungen in dieser Beschreibung, die auf den Kühlmittelkanal bezogen sind, sind jeweils auf den wenigstens einen Kühlmittelkanal übertragbar und umgekehrt. Die Ausführungen sind zudem vorzugsweise auf jeden der mehreren Kühlmittelkanäle anwendbar, sofern vorhanden. Der Kühlmittelkanal ermöglicht eine besonders zuverlässige Kühlung des Bauteils während des Betriebs der elektrischen Maschine.

Eine Weiterbildung der Erfindung sieht vor, dass das Einstellen der Temperatur der wenigstens einen Drahtwicklung durch Einstellen einer Spannung und/oder einer Stromstärke des durch die wenigstens eine Drahtwicklung fließenden elektrischen Stroms erfolgt, insbesondere durch geregeltes Einstellen. Der elektrische Widerstand der Drahtwicklung ändert sich mit ihrer Temperatur, sodass der Widerstand also temperaturabhängig ist. Gleichzeitig ist der Widerstand abhängig von der Spannung und der Stromstärke, insbesondere ist die Stromstärke eine Funktion der Spannung und des Widerstands und/oder die Spannung eine Funktion der Stromstärke und des Widerstands. Beispielsweise werden Spannung und Stromstärke derart eingestellt, dass die Temperatur und damit der elektrische Widerstand konstant gehalten wird, sodass insgesamt die der Drahtwicklung zugeführte elektrische Leistung und die sich hieraus ergebende Wärmemenge durch das Einstellen der Stromstärke angepasst wird. Es kann vorgesehen sein, dass die Spannung auf eine Sollspannung und/oder die Stromstärke auf eine Sollstromstärke eingestellt wird, insbesondere auf eine zum Erzielen der ersten Temperatur gewählte erste Sollspannung und/oder erste Sollstromstärke, und nachfolgend auf eine zum Erzielen der zweiten Temperatur gewählte zweite Sollspannung und/oder zweite Sollstromstärke.

Beispielsweise erfolgt das Einstellen der Spannung und/oder der Stromstärke geregelt, vorzugsweise im Rahmen einer Temperaturregelung. Hierzu ist es beispielsweise vorgesehen, die Temperatur der wenigstens einen Drahtwicklung mittels eines Sensors zu messen oder anhand der Spannung und der Stromstärke beziehungsweise anhand ihres elektrischen Widerstands zu berechnen. Die momentan vorliegende Temperatur der Drahtwicklung, welche auch als Isttemperatur bezeichnet werden kann, wird also entweder gemessen oder berechnet, letzteres unter Verwendung der Spannung und der Stromstärke. Die Spannung und/oder die Stromstärke des durch die Drahtwicklung fließenden Stroms werden derart angepasst, insbesondere regelnd, dass sich die Isttemperatur in Richtung einer Solltemperatur verändert, insbesondere bis auf diese. Anders ausgedrückt wird durch das Einstellen der Spannung und/oder der Stromstärke die Isttemperatur der Drahtwicklung auf die Solltemperatur eingestellt, wobei die Solltemperatur zeitweise der ersten Temperatur und zeitweise der zweiten Temperatur entspricht. Die beschriebene Vorgehensweise ermöglicht ein rasches und effizientes Einstellen der Temperatur der Drahtwicklung.

Eine Weiterbildung der Erfindung sieht vor, dass das Imprägniermittel mit einem Imprägniermitteldurchsatz in die zumindest eine Nut eingebracht wird, der in Abhängigkeit von der Temperatur der wenigstens einen Drahtwicklung gewählt wird, wobei insbesondere der Imprägniermitteldurchsatz bei einer in einem bestimmten Temperaturbereich liegenden Temperatur der wenigstens einen Drahtwicklung größer gewählt wird als bei einer abseits des Temperaturbereichs liegenden Temperatur. Es wurde bereits erläutert, dass die Viskosität des Imprägniermittels von seiner Temperatur abhängt und mithin auch mittelbar von der Temperatur der Drahtwicklung.

Das Einbringen des Imprägniermittels in die Nut erfolgt mit dem Imprägniermitteldurchsatz, also einer Menge des Imprägniermittels pro Zeiteinheit. Der Imprägniermitteldurchsatz ist beispielsweise ein Massenstrom oder ein Volumenstrom. Da die Viskosität des Imprägniermittels temperaturabhängig ist, ist es sinnvoll, den Imprägniermitteldurchsatz in Abhängigkeit von der Temperatur der Drahtwicklung zu wählen. Es kann vorgesehen sein, den Imprägniermitteldurchsatz während des Einbringens des Imprägniermittels in die Nut in Abhängigkeit von der momentan vorliegende Isttemperatur der Drahtwicklung festzulegen, welche beispielsweise gemessen oder berechnet wird. Es kann jedoch auch vorgesehen sein, dass der Imprägniermitteldurchsatz festgelegt wird, bevor das Imprägniermittel in die Nut eingebracht wird, nämlich unter Verwendung eines Temperaturverlaufs, welchem die Temperatur der Drahtwicklung während des Einbringens des Imprägniermittels in die Nut folgt.

Besonders bevorzugt ist es vorgesehen, dass der Imprägniermitteldurchsatz bei der in dem bestimmten Temperaturbereich liegenden Temperatur größer gewählt wird als bei einer abseits beziehungsweise außerhalb des Temperaturbereichs liegenden Temperatur. Der Temperaturbereich ist hierbei vorzugsweise derart gewählt, dass er diejenige Temperatur einschließt, bei welcher das Imprägniermittel seine geringste Viskosität aufweist. Der Temperaturbereich wird von einer unteren Temperaturgrenze in Richtung niedrigerer Temperaturen und von einer oberen Temperaturgrenze in Richtung höherer Temperaturen begrenzt. Beispielsweise nimmt der Temperaturbereich die Temperatur, mit welcher die geringste Viskosität erzielt wird, mittig in sich auf oder diese Temperatur begrenzt den Temperaturbereich, insbesondere in Richtung höherer Temperaturen. In ersterem Fall liegt die Temperatur mittig zwischen den Temperaturgrenzen und in letzterem Fall entspricht sie einer der Temperaturgrenzen.

Liegt die Isttemperatur der Drahtwicklung außerhalb des Temperaturbereichs, ist sie also größer als die obere Temperaturgrenze oder kleiner als die untere Temperaturgrenze, so wird davon ausgegangen, dass eine höhere Viskosität des Imprägniermittels vorliegt. Entsprechend wird der Imprägniermitteldurchsatz kleiner gewählt. Vorzugsweise wird der Imprägniermitteldurchsatz umso kleiner gewählt, je weiter die Temperatur abseits beziehungsweise außerhalb des Temperaturbereichs liegt. Weiter bevorzugt ist eine Vorgehensweise, bei welcher der Imprägniermitteldurchsatz bei oberhalb des Temperaturbereichs liegender Temperatur kleiner gewählt wird beziehungsweise stärker reduziert wird als bei unterhalb des Temperaturbereichs liegender Temperatur. Mit der beschriebenen Vorgehensweise wird ein bedarfsgerechtes Einbringen des Imprägniermittels in die Nut erreicht, wobei insbesondere sichergestellt wird, dass das Imprägniermittel die Nut zuverlässig füllt.

Eine Weiterbildung der Erfindung sieht vor, dass die Temperatur der wenigstens einen Drahtwicklung ausgehend von einer Starttemperatur in Richtung der ersten Temperatur erhöht und währenddessen zumindest zeitweise der Imprägniermitteldurchsatz erhöht wird. Als Starttemperatur wird diejenige Temperatur verstanden, welche die Drahtwicklung zu Beginn des Einbringens des Imprägniermittels in die Nut oder unmittelbar vor dem Einbringen aufweist. Beispielsweise ist die Starttemperatur derart gewählt, dass das Imprägniermittel eine Viskosität aufweist, welche höchstens 50 %, höchstens 30 % oder höchstens 10 % größer ist als seine minimale Viskosität während seines Einbringens in die Nut. Die Starttemperatur liegt insoweit bereits oberhalb einer Umgebungstemperatur der Vorrichtung, mittels welcher das Bauteil hergestellt wird.

Beispielsweise wird die Drahtwicklung durch Vorheizen auf die Starttemperatur gebracht, insbesondere ebenfalls durch Bestromen der Drahtwicklung, nämlich bevor das Imprägniermittel in die Nut eingebracht wird. Beispielsweise beginnt das Einbringen des Imprägniermittels in die Nut, sobald die Temperatur der Drahtwicklung die Starttemperatur erreicht hat. Ausgehend von der Starttemperatur wird die Temperatur der Drahtwicklung in Richtung der ersten Temperatur erhöht, insbesondere bis auf die erste Temperatur, während das Imprägniermittel in die Nut eingebracht wird, vorzugsweise während eines ersten Zeitraums. Währenddessen wird zudem der Imprägniermitteldurchsatz erhöht. Beispielsweise wird der Imprägniermitteldurchsatz auf einen Startdurchsatz gesetzt, sobald die Temperatur der Starttemperatur entspricht. Ausgehend von diesem Startdurchsatz wird der Imprägniermitteldurchsatz in Richtung eines ersten Durchsatzes erhöht.

Es kann vorgesehen sein, dass der Imprägniermitteldurchsatz bereits vor dem Erreichen der ersten Temperatur durch die Temperatur dem ersten Imprägniermitteldurchsatz entspricht. Es kann jedoch auch vorgesehen sein, dass der Imprägniermitteldurchsatz den ersten Durchsatz erst erreicht, sobald die Temperatur der ersten Temperatur entspricht beziehungsweise diese erreicht. Vorzugsweise liegen sowohl die Starttemperatur als auch die erste Temperatur in dem bereits erwähnten ersten Temperaturbereich, in welchem eine vergleichsweise niedrige Viskosität des Imprägniermittels vorliegt. Beispielsweise begrenzt die Starttemperatur den ersten Temperaturbereich in Richtung niedriger Temperaturen und die erste Temperatur in Richtung höherer Temperaturen. In jedem Fall wird mit der beschriebenen Vorgehensweise ein zuverlässiges Einbringen des Imprägniermittels in die Nut erreicht, insbesondere unter Vermeidung von Hohlräumen.

Eine Weiterbildung der Erfindung sieht vor, dass während eines Erhöhens der Temperatur der wenigstens einen Drahtwicklung aus Richtung der ersten Temperatur in Richtung der zweiten Temperatur der Imprägniermitteldurchsatz zumindest zeitweise verringert wird. Vorzugsweise erfolgt das Erhöhen der Temperatur ausgehend von der ersten Temperatur bis auf die zweite Temperatur, insbesondere während eines auf den ersten Zeitraum folgenden zweiten Zeitraums. Zu Beginn des zweiten Zeitraums entspricht insoweit die Temperatur der ersten Temperatur und am Ende des zweiten Zeitraums der zweiten Temperatur.

Während des Erhöhens der Temperatur, also während des zweiten Zeitraums, wird der Imprägniermitteldurchsatz zumindest zeitweise verringert. Beispielsweise entspricht er zu Beginn des zweiten Zeitraums dem ersten Durchsatz und am Ende des zweiten Zeitraums einem zweiten Durchsatz, welcher niedriger ist als der erste Durchsatz. Es kann vorgesehen sein, dass der Imprägniermitteldurchsatz bereits vor dem Ende des zweiten Zeitraums dem zweiten Durchsatz entspricht und bis zum Ende des zweiten Zeitraums auf diesem gehalten wird.

Beispielsweise erreicht der Imprägniermitteldurchsatz den zweiten Durchsatz nach einem Verstreichen von mindestens 20 %, mindestens 40 % oder mindestens 60 % und/oder höchstens 90 %, höchstens 80 % oder höchstens 70 % des zweiten Zeitraums. Durch das Erhöhen der Temperatur in Richtung der zweiten Temperatur erhöht sich die Viskosität des Imprägniermittels, insbesondere setzt eine Gelierung des Imprägniermittels ein. Da auch während der zweiten Zeitspanne weiterhin Imprägniermittel in die Nut eingebracht wird, wird ein zuverlässiges Füllen der Nut mit dem Imprägniermittel gewährleistet und die Entstehung von Hohlräumen vermieden.

Eine Weiterbildung der Erfindung sieht vor, dass die Temperatur der wenigstens einen Drahtwicklung ausgehend von der zweiten Temperatur in Richtung einer Endtemperatur angepasst und währenddessen der Imprägniermitteldurchsatz zumindest zeitweise verringert wird. Die Endtemperatur ist diejenige Temperatur, welche die Drahtwicklung am Ende des Einbringens des Imprägniermittels in die Nut aufweist, also bei einem Beenden der Imprägniermittelzufuhr in die Nut. Es kann vorgesehen sein, dass die Endtemperatur der zweiten Temperatur entspricht. Alternativ ist sie größer als die zweite Temperatur.

Das Anpassen der Temperatur ausgehend von der zweiten Temperatur in Richtung der Endtemperatur erfolgt während eines dritten Zeitraums. Zu Beginn des dritten Zeitraums entspricht die Temperatur der zweiten Temperatur, am Ende des dritten Zeitraums der Endtemperatur. Vorzugsweise wird das Einbringen des Imprägniermittels in die Nut am Ende des dritten Zeitraums eingestellt, der Imprägniermitteldurchsatz also auf null abgesenkt. Bevorzugt entspricht der Imprägniermitteldurchsatz zu Beginn des dritten Zeitraums dem zweiten Durchsatz oder einem weiteren zweiten Durchsatz, welche niedriger ist als der zweite Durchsatz. Es kann also vorgesehen sein, den Imprägniermitteldurchsatz am Ende des zweiten Zeitraums beziehungsweise zu Beginn des dritten Zeitraums zu verringern, insbesondere schlagartig.

Während des dritten Zeitraums wird der Imprägniermitteldurchsatz zumindest zeitweise verringert, insbesondere ausgehend von dem zweiten Durchsatz beziehungsweise dem weiteren zweiten Durchsatz in Richtung eines dritten Durchsatzes. Hierdurch wird dem Umstand Rechnung getragen, dass das Imprägniermittel während des dritten Zeitraums verfestigt wird, insbesondere durch Gelieren. Dennoch wird weiterhin Imprägniermittel in die Nut eingebracht, um eine vollständige Füllung der Nut sicherzustellen. Mithilfe dieser Vorgehensweise wird ein besonders hoher Füllungsgrad der Nut mit dem Imprägniermittel erzielt.

Eine Weiterbildung der Erfindung sieht vor, dass nach dem Erreichen der Endtemperatur die Temperatur der wenigstens einen Drahtwicklung über einen bestimmten Zeitraum konstant gehalten wird, insbesondere über einen in Abhängigkeit von der Endtemperatur gewählten Zeitraum. Der Zeitraum kann auch als vierter Zeitraum bezeichnet werden. Während des vierten Zeitraums erfolgt ein vollständiges Verfestigen des Imprägniermittels, insbesondere wird eine Länge des Zeitraums derart gewählt, dass das Imprägniermittel vollständig verfestigt beziehungsweise geliert. Während des Zeitraums wird die Temperatur der Drahtwicklung konstant gehalten, insbesondere auf der Endtemperatur. Der Zeitraum beziehungsweise seine Länge wird vorzugsweise in Abhängigkeit von der Endtemperatur gewählt, da die Geschwindigkeit, mit welcher das Imprägniermittel verfestigt wird, temperaturabhängig ist. Je höher die Temperatur ist, umso kürzer wird der Zeitraum gewählt beziehungsweise umgekehrt. Durch das bedarfsgerechte Wählen des Zeitraums wird eine möglichst kurze Taktzeit bei dem Herstellen des Bauteils erreicht.

Eine Weiterbildung der Erfindung sieht vor, dass die Temperatur der wenigstens einen Drahtwicklung entsprechend einem vorgegebenen Temperaturverlauf und der Imprägniermitteldurchsatz entsprechend einem vorgegebenen Durchsatzverlauf eingestellt werden, wobei der Temperaturverlauf und der Durchsatzverlauf in Abhängigkeit von dem Imprägniermittel und/oder einer Geometrie des Bauteils festgelegt werden. Unter dem Temperaturverlauf ist ein Verlauf der Temperatur über der Zeit und unter dem Durchsatzverlauf ein Verlauf des Imprägniermitteldurchsatz über der Zeit zu verstehen.

Sowohl der Temperaturverlauf als auch der Durchsatzverlauf werden vor dem Beginn des Einbringens des Imprägniermittels in die Nut festgelegt und nachfolgend in Abhängigkeit von der Zeit abgefahren. Während des Einbringens des Imprägniermittels in die Nut wird also die Temperatur der Drahtwicklung entsprechend dem Temperaturverlauf und der Imprägniermittel Durchsatz entsprechend dem Durchsatzverlauf eingestellt. Zur Abstimmung auf das Bauteil und das Imprägniermittel werden der Temperaturverlauf und der Durchsatzverlauf in Abhängigkeit von dem Imprägniermittel und/oder dem Bauteil beziehungsweise seiner Geometrie ermittelt und festgelegt. Die Verwendung der Verläufe ermöglicht eine besonders kurze Taktzeit bei dem Herstellen des Bauteils, wobei gleichzeitig die bereits genannten Vorteile erzielt werden.

Eine Weiterbildung der Erfindung sieht vor, dass anhand einer in die zumindest eine Nut eintretenden Eintrittsmenge des Imprägniermittels und einer aus der zumindest einen Nut austretenden Austrittsmenge des Imprägniermittels eine in der zumindest einen Nut befindliche Gesamtmenge des Imprägniermittels bestimmt und die Temperatur und/oder der Imprägniermitteldurchsatz in Abhängigkeit von der Gesamtmenge gewählt werden. Zum einen wird die Eintrittsmenge ermittelt, insbesondere aus der Menge des Imprägniermittels, welche pro Zeiteinheit in die Nut eingebracht wird. Beispielsweise entspricht die Eintrittsmenge der Menge des Imprägniermittels, welche aus der wenigstens einen Düse ausgebracht wird.

Zusätzlich wird die Austrittsmenge erfasst, vorzugsweise aus der Menge des Imprägniermittels, welche pro Zeiteinheit aus der Nut austritt. Aus der Differenz zwischen der Eintrittsmenge und der Austrittsmenge kann auf die in der Nut verbleibende Menge des Imprägniermittels geschlossen werden. Beispielsweise ist es vorgesehen, die Temperatur ausgehend von der ersten Temperatur in Richtung der zweiten Temperatur zu erhöhen, sobald die Gesamtmenge des Imprägniermittels einen Schwellenwert überschreitet, also größer ist als dieser. Hierdurch wird sichergestellt, dass das Verfestigen des Imprägniermittels erst dann erfolgt, wenn die Nut vollständig oder zumindest nahezu vollständig mit dem Imprägniermittel gefüllt ist. Zudem kann es vorgesehen sein, den Imprägniermitteldurchsatz umso geringer zu wählen, je näher die Gesamtmenge an dem Schwellenwert liegt, um einen Verbrauch des Imprägniermittels zu verringern. Mit der beschriebenen Vorgehensweise werden die bereits erwähnten Vorteile realisiert.

Eine Weiterbildung der Erfindung sieht vor, dass nach dem Einbringen des Imprägniermittels in die zumindest eine Nut die Temperatur der wenigstens einen Drahtwicklung mittels einer externen Heizeinrichtung eingestellt wird. Dies erfolgt insbesondere während des bereits erwähnten vierten Zeitraums, in welcher das Verfestigen des Imprägniermittels erfolgt. Es kann vorgesehen sein, dass die externe Heizeinrichtung zusätzlich zu dem Anlegen des elektrischen Stroms an der Drahtwicklung zum Einstellen der Temperatur verwendet wird.

Besonders bevorzugt wird jedoch das Beaufschlagen der Drahtwicklung mit dem elektrischen Stroms beendet und die Temperatur der Drahtwicklung unter Verwendung der externen Heizeinrichtung aufrechterhalten. Dies erfolgt insbesondere derart, dass das Imprägniermittel vollständig aushärtet. Als externe Heizeinrichtung wird beispielsweise ein Ofen verwendet, in welchem das Bauteil angeordnet wird. Bevorzugt wird die Orientierung der Längsmittelachse des Bauteils beibehalten, sodass also die Längsmittelachse während des Beheizens des Bauteils mithilfe der externen Heizeinrichtung identisch ausgerichtet ist wie während des Einbringens des Imprägniermittels. Hierdurch wird wiederum ein gleichmäßiges Aushärten des Imprägniermittels erreicht.

Zusätzlich oder alternativ wird die externe Heizeinrichtung oder eine andere externe Heizeinrichtung zudem zum Vorwärmen des Bauteils verwendet. Während des Vorwärmens wird die Temperatur des Bauteils erhöht, bevor das Imprägniermittel in die Nut eingebracht wird. Beispielsweise wird das Bauteil im Zuge des Vorwärmens bis auf die erste Temperatur vorgewärmt, sodass nachfolgend der Energiebedarf zum Einstellen seiner Temperatur auf die erste Temperatur durch das Bestromen der Drahtwicklung geringer ausfällt.

Eine Weiterbildung der Erfindung sieht vor, dass das Imprägniermittel zum Einbringen in die zumindest eine Nut durch wenigstens eine Düse ausgebracht wird, die zumindest zeitweise relativ zu dem Bauteil verlagert wird. Auf die Verwendung der Düse zum Ausbringen des Imprägniermittels beziehungsweise zu seinem Einbringen in die Nut wurde bereits hingewiesen. Die Düse wird zeitweise relativ zu dem Bauteil verlagert, insbesondere auch während des Einbringens des Imprägniermittels in die Nut. Beispielsweise wird die Düse über der Nut entsprechend eines Bewegungspfads verlagert, welcher beispielsweise kreisförmig ist. Das Verlagern der Düse erfolgt derart, dass das Imprägniermittel gleichmäßig verteilt in die Nut eingebracht wird beziehungsweise derart eingebracht wird, dass sich eine gleichmäßige Verteilung des Imprägniermittels in der Nut einstellt.

Die Erfindung betrifft weiterhin eine Vorrichtung zur Herstellung eines Bauteils für eine elektrische Maschine, insbesondere zur Durchführung des Verfahrens gemäß den Ausführungen im Rahmen dieser Beschreibung, wobei das Bauteil einen Magnetkern mit zumindest einer Nut aufweist, die wenigsten eine Drahtwicklung aufnimmt, parallel zu einer Längsmittelachse des Bauteils verläuft und den Magnetkern vollständig durchgreift, und wobei die Vorrichtung dazu vorgesehen und ausgestaltet ist, das Bauteil während eines Einbringens eines Imprägniermittels in die zumindest eine Nut derart auszurichten, dass das Imprägniermittel durch Schwerkrafteinfluss in Richtung der Längsmittelachse in die zumindest eine Nut hineingedrängt wird.

Dabei ist die Vorrichtung weiter dazu vorgesehen und ausgestaltet, eine Temperatur der wenigstens einen Drahtwicklung durch Anlegen eines elektrischen Stroms während des Einbringens des Imprägniermittels in die zumindest eine Nut zunächst auf eine zur Reduzierung einer Viskosität des Imprägniermittels gewählte niedrigere erste Temperatur und anschließend auf eine zur Erhöhung der Viskosität des Imprägniermittels gewählte höhere zweite Temperatur einzustellen.

Auf die Vorteile einer derartigen Ausgestaltung der Vorrichtung zur Herstellung eines Bauteils für eine elektrische Maschine beziehungsweise einer derartigen Vorgehensweise wurde bereits hingewiesen. Sowohl die Vorrichtung als auch das Verfahren zu ihrem Betreiben können gemäß den Ausführungen im Rahmen dieser Beschreibung weitergebildet sein, sodass insoweit auf diese verwiesen wird.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Vorrichtung zur Herstellung eines Bauteils für eine elektrische Maschine sowie des Bauteils,
- Figur 2: eine schematische Querschnittsdarstellung des Bauteils für die elektrische Maschine, sowie
- Figur 3: zwei Diagramme, in welchen ein Temperaturverlaufs sowie ein Imprägniermitteldurchsatz jeweils über der Zeit beispielhaft aufgetragen sind.

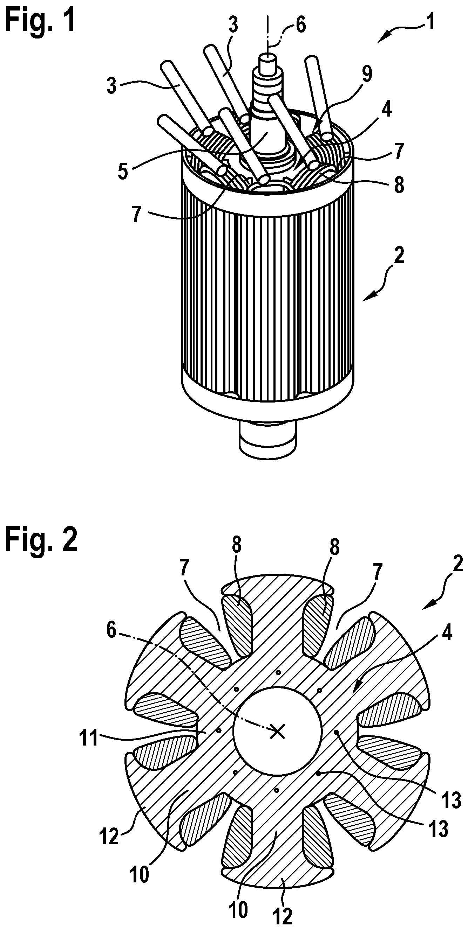

Die Figur 1 zeigt schematisch eine Vorrichtung 1 zur Herstellung eines Bauteils 2 für eine nicht weiter dargestellte elektrische Maschine. Von der Vorrichtung ist lediglich wenigstens eine Düse 3 (hier: mehrere Düsen 3) dargestellt, mittels welcher ein Imprägniermittel in Richtung des Bauteils 2 ausbringbar ist. Das Bauteil 2 liegt rein beispielhaft als Rotor der elektrischen Maschine vor. Es verfügt über einen Magnetkern 4, der auf einer Welle 5 der elektrische Maschine angeordnet und gemeinsam mit dieser um eine Drehachse 6 drehbar gelagert ist.

In dem Magnetkern 4 sind mehrere Nuten 7 hergestellt, von welchen hier lediglich einige beispielhaft gekennzeichnet sind. In den Nuten 7 ist wenigstens eine Drahtwicklung 8 aufgenommen. Gezeigt ist ein Ausführungsbeispiel, bei welchem mehrere Nuten 7 vorliegen, in welchen mehrere Drahtwicklungen 8 angeordnet sind. Die Drahtwicklungen 8 bilden stirnseitig des Magnetkerns 4 einen Wickelkopf 9, sodass sie in axialer Richtung bezüglich der Drehachse 6 gesehen über den Magnetkern 4 überstehen. Vorzugsweise sind in den Nuten 7 zudem hier nicht dargestellte Verdrängerkörper angeordnet. Die Verdrängerkörper dienen einem Beabstanden von in derselben Nut 7 angeordneten Drahtwicklungen 8 in Umfangsrichtung. Die Verdrängerkörper dienen einem zuverlässigen Halten der Drahtwicklungen 8 in Umfangsrichtung.

Bevorzugt bestehen sie aus einem nichtmagnetischen und/oder nichtmagnetisierbaren Material, zum Beispiel aus Kunststoff.

Mithilfe der wenigstens einen Düse 3 wird das Imprägniermittel in die Nuten 7 des Magnetkerns 4 eingebracht. Hierzu wird das Bauteil 2 senkrecht ausgerichtet, also derart, dass seine Längsmittelachse, welche hier mit der Drehachse 6 zusammenfällt, senkrecht ausgerichtet ist. Das bedeutet, dass die Längsmittelachse parallel zu einem Schwerkraftvektor verläuft beziehungsweise senkrecht auf einer gedachten Ebene steht, welche wiederum senkrecht auf dem Schwerkraftvektor steht.

Die Figur 2 zeigt eine schematische Querschnittsdarstellung des Bauteils 2. Erkennbar ist der Magnetkern 4, welcher mehrere Pole 10 aufweist, die sich in radialer Richtung bezüglich der Drehachse 6 von einem Grundkörper 11 ausgehend nach außen erstrecken. Die Pole 10 weisen auf ihrer in radialer Richtung außen liegenden Seite jeweils einen Polschuh 12 auf, in dessen Bereich sie sich in Umfangsrichtung aufweiten. Sowohl die Pole 10 als auch die Polschuhe 12 sind in Umfangsrichtung beabstandet voneinander angeordnet, berühren also einander nicht. Insbesondere greifen die bereits erwähnten Verdrängerkörper zwischen die Pole 10 ein, bevorzugt zudem zwischen die Polschuhe 12. Die Verdrängerkörper sind insoweit in Umfangsrichtung gesehen zwischen benachbarten Polen 10 und/oder benachbarten Polschuhen 12 angeordnet. Insbesondere liegen die Verdrängerkörper auf in Umfangsrichtung gegenüberliegenden Seiten an den Polschuhen 12 an.

Die Pole 10 begrenzen in Umfangsrichtung die Nuten 7, in welchen die Drahtwicklungen 8 angeordnet sind. Insbesondere ist jedem der Pole 10 eine solche Drahtwicklung 8 zugeordnet beziehungsweise ist jeder der Pole 10 von einer solchen Drahtwicklung umgriffen, sodass jede der Drahtwicklungen 8 in von demselben Pol 10 begrenzten Nuten 7 vorliegt. Es ist erkennbar, dass in dem Magnetkern 4, insbesondere in dem Grundkörper 11, zusätzlich mehrere Kühlmittelkanäle 13 hergestellt sind, von welchen lediglich einige beispielhaft angedeutet sind.

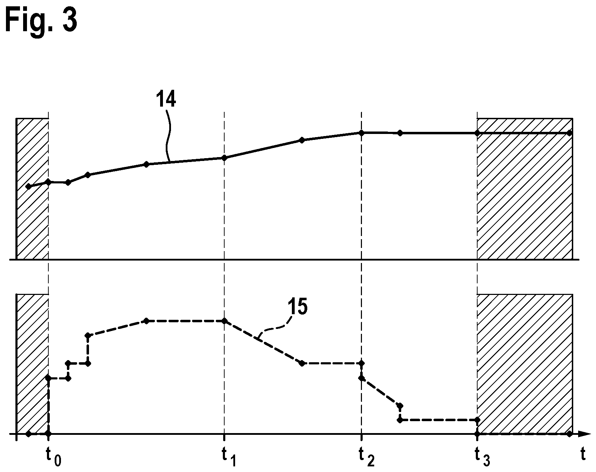

Die Figur 3 zeigt zwei Diagramme, in welcher eine Temperatur und ein Imprägniermitteldurchsatz über der Zeit aufgetragen sind, nämlich die Temperatur in einem Verlauf 14 und der Imprägniermitteldurchsatz in einem Verlauf 15. Angedeutet sind mehrere Zeitpunkte t₀, t₁, t₂, und t₃, wobei für t₀ ≤ t < t₁ ein erster Zeitraum, für t₁ ≤ t < t₂ ein zweiter Zeitraum und für t₂ ≤ t < t₃ ein dritter Zeitraum vorliegt. Ein vierter Zeitraum liegt für t ≥ t₃ vor. Die mit dem Verlauf 14 gezeigte Temperatur ist eine Isttemperatur der Drahtwicklung 8, welche durch ein Bestromen der Drahtwicklung 8 eingestellt wird. Beispielsweise ist es vorgesehen, die Isttemperatur der Drahtwicklung 8 zu messen oder zu berechnen und eine Stromstärke und/oder eine Spannung des der Drahtwicklung 8 zugeführten elektrischen Stroms so anzupassen, dass sich die Isttemperatur der Drahtwicklung 8 auf eine Solltemperatur einstellt.

Der Imprägniermitteldurchsatz des Verlaufs 15 beschreibt den Durchsatz, mit welchem das Imprägniermittel in die Nuten 7 des Magnetkerns 4 eingebracht wird. Zu Beginn des ersten Zeitraums, also in dem Zeitpunkt t₀, entspricht die Temperatur einer Ausgangstemperatur und der Imprägniermitteldurchsatz einem Ausgangsdurchsatz. Während des ersten Zeitraums wird die Temperatur in Richtung einer ersten Temperatur erhöht. Zusätzlich wird der Durchsatz in Richtung eines ersten Durchsatzes erhöht. Während des zweiten Zeitraums wird die Temperatur ausgehend von der ersten Temperatur weiter in Richtung einer zweiten Temperatur erhöht, wohingegen der Durchsatz ausgehend von dem ersten Durchsatz in Richtung eines zweiten Durchsatzes verringert wird.

In dem dritten Zeitraum wird die Temperatur ausgehend von der zweiten Temperatur in Richtung einer Endtemperatur angepasst, wobei die Endtemperatur in dem dargestellten Ausführungsbeispiel der zweiten Temperatur entspricht. Während des dritten Zeitraums wird zudem der Durchsatz ausgehend von dem zweiten Durchsatz verringert, nämlich in Richtung eines Enddurchsatzes, welcher beispielsweise gleich null ist. In dem vierten Zeitraum wird die Temperatur der Drahtwicklung 8 auf der Endtemperatur gehalten, jedoch kein Imprägniermittel mehr in die Nuten 7 eingebracht.

Während des ersten Zeitraums ist die Temperatur der Drahtwicklung 8 derart gewählt, dass eine möglichst geringe Viskosität des Imprägniermittels vorliegt. Während des zweiten Zeitraums wird die Temperatur der Drahtwicklung 7 erhöht, nämlich derart, dass eine Temperatur erreicht wird, bei welcher ein Verfestigen des Imprägniermittels beginnt, insbesondere ein Gelieren des Imprägniermittels. Diese Temperatur wird während des dritten Zeitraums beibehalten, um ein durchgehendes Verfestigen des Imprägniermittels zu erzielen. Während des vierten Zeitraums wird die Temperatur der Drahtwicklung 8 beispielsweise mittels einer externen Heizeinrichtung aufrechterhalten, bis das Imprägniermittel vollständig ausgehärtet ist.

Mithilfe der beschriebenen Vorgehensweise zum Herstellen des Bauteils 2 für die elektrische Maschine wird durch die Kombination unterschiedlicher Maßnahmen ein hoher Füllgrad der Nuten 7 mit dem Imprägniermittel erzielt. Zum einen ist die Längsmittelachse des Bauteils 2 senkrecht ausgerichtet, sodass das Imprägniermittel durch Schwerkrafteinfluss, insbesondere allein durch Schwerkrafteinfluss, in axialer Richtung bezüglich der Längsmittelachse durch die Nuten 7 hindurch gedrängt beziehungsweise gefördert wird. Zum anderen wird durch das Bestromen der Drahtwicklungen 8 auf einfache Art und Weise die gewünschte Temperatur erzielt. Die Temperatur der Drahtwicklung 8 sowie der Imprägniermitteldurchsatz sind zudem derart gewählt, dass zunächst ein vollständiges Eindringen des Imprägniermittels in die Nuten 7 sichergestellt ist und anschließend ein Verfestigen des Imprägniermittels bei gleichzeitigem Halten des Imprägniermittels in der Nut 7 erreicht wird.

### BEZUGSZEICHENLISTE:

- 1: Vorrichtung
- 2: Bauteil
- 3: Düse
- 4: Magnetkern
- 5: Welle
- 6: Drehachse
- 7: Nut
- 8: Drahtwicklung
- 9: Wickelkopf
- 10: Pol
- 11: Grundkörper
- 12: Polschuh
- 13: Kühlmittelkanal
- 14: Verlauf
- 15: Verlauf

## Patentansprüche

1. Verfahren zum Herstellen eines Bauteils (2) für eine elektrische Maschine, wobei das Bauteil (2) einen Magnetkern (4) mit zumindest einer Nut (7) aufweist, die wenigstens eine Drahtwicklung (8) aufnimmt, parallel zu einer Längsmittelachse des Bauteils (2) verläuft und den Magnetkern (4) vollständig durchgreift, und wobei das Bauteil (2) während eines Einbringens eines Imprägniermittels in die zumindest eine Nut (7) derart ausgerichtet wird, dass das Imprägniermittel durch Schwerkrafteinfluss in Richtung der Längsmittelachse in die zumindest eine Nut (7) hineingedrängt wird, **dadurch gekennzeichnet, dass** eine Temperatur der wenigstens einen Drahtwicklung (8) durch Anlegen eines elektrischen Stroms während des Einbringens des Imprägniermittels in die zumindest eine Nut (7) zunächst auf eine zur Reduzierung einer Viskosität des Imprägniermittels gewählte niedrigere erste Temperatur und anschließend auf eine zur Erhöhung der Viskosität des Imprägniermittel gewählte höhere zweite Temperatur eingestellt wird.

2. Verfahren nach Anspruch 1, **dadurch gekennzeichnet, dass** das Einstellen der Temperatur der wenigstens einen Drahtwicklung (8) durch Einstellen einer Spannung und/oder einer Stromstärke des durch die wenigstens eine Drahtwicklung (8) fließenden elektrischen Stroms erfolgt.

3. Verfahren nach einem der vorhergehenden Ansprüche, **dadurch gekennzeichnet, dass** das Imprägniermittel mit einem Imprägniermitteldurchsatz in die zumindest eine Nut (7) eingebracht wird, der in Abhängigkeit von der Temperatur der wenigstens einen Drahtwicklung (8) gewählt wird.

4. Verfahren nach einem der vorhergehenden Ansprüche, **dadurch gekennzeichnet, dass** die Temperatur der wenigstens einen Drahtwicklung (8) von einer Starttemperatur in Richtung der ersten Temperatur erhöht und währenddessen zumindest zeitweise der Imprägniermitteldurchsatz erhöht wird.

5. Verfahren nach einem der vorhergehenden Ansprüche, **dadurch gekennzeichnet, dass** während eines Erhöhens der Temperatur der wenigstens einen Drahtwicklung (8) aus Richtung der ersten Temperatur in Richtung der zweiten Temperatur der Imprägniermitteldurchsatz zumindest zeitweise verringert wird.

6. Verfahren nach einem der vorhergehenden Ansprüche, **dadurch gekennzeichnet, dass** die Temperatur der wenigstens einen Drahtwicklung (8) ausgehend von der zweiten Temperatur in Richtung einer Endtemperatur angepasst und währenddessen der Imprägniermitteldurchsatz zumindest zeitweise verringert wird.

7. Verfahren nach einem der vorhergehenden Ansprüche, **dadurch gekennzeichnet, dass** nach dem Erreichen der Endtemperatur die Temperatur der wenigstens einen Drahtwicklung (8) über einen bestimmten Zeitraum konstant gehalten wird.

8. Verfahren nach einem der vorhergehenden Ansprüche, **dadurch gekennzeichnet, dass** die Temperatur der wenigstens einen Drahtwicklung (8) entsprechend einem vorgegebenen Temperaturverlauf und der Imprägniermitteldurchsatz entsprechend einem vorgegebenen Durchsatzverlauf eingestellt werden, wobei der Temperaturverlauf und der Durchsatzverlauf in Abhängigkeit von dem Imprägniermittel und/oder einer Geometrie des Bauteils (2) festgelegt werden.

9. Verfahren nach einem der vorhergehenden Ansprüche, **dadurch gekennzeichnet, dass** das Imprägniermittel zum Einbringen in die zumindest eine Nut (7) durch mindestens eine Düse (3) ausgebracht wird, die zumindest zeitweise relativ zu dem Bauteil (2) verlagert wird.

10. Vorrichtung (1) zur Herstellung eines Bauteils (2) für eine elektrische Maschine, insbesondere zur Durchführung des Verfahrens nach einem oder mehreren der vorhergehenden Ansprüche, wobei das Bauteil (2) einen Magnetkern (4) mit zumindest einer Nut (7) aufweist, die wenigstens eine Drahtwicklung (8) aufnimmt, parallel zu einer Längsmittelachse des Bauteils (2) verläuft und den Magnetkern (4) vollständig durchgreift, und wobei die Vorrichtung (1) dazu vorgesehen und ausgestaltet ist, das Bauteil (2) während eines Einbringens eines Imprägniermittels in die zumindest eine Nut (7) derart auszurichten, dass das Imprägniermittel durch Schwerkrafteinfluss in Richtung der Längsmittelachse in die zumindest eine Nut (7) hineingedrängt wird, **dadurch gekennzeichnet, dass** die Vorrichtung (1) weiter dazu vorgesehen und ausgestaltet ist, eine Temperatur der wenigstens einen Drahtwicklung (8) durch Anlegen eines elektrischen Stroms während des Einbringens des Imprägniermittels in die zumindest eine Nut (7) zunächst auf eine zur Reduzierung einer Viskosität des Imprägniermittels gewählte niedrigere erste Temperatur und anschließend auf eine zur Erhöhung der Viskosität des Imprägniermittels gewählte höhere zweite Temperatur einzustellen.
